# EUROPEAN PATENT SPECIFICATION

(11) **EP 3 041 720 B1**
(45) Date of publication and mention of the grant of the patent: **04.12.2019**
(21) Application number: 14771448.9
(22) Date of filing: 02.09.2014
(51) Int. Cl.: B60W 30/12

(54) **ENHANCED LANE DEPARTURE WARNING WITH INFORMATION FROM REAR RADAR SENSORS**
VERBESSERTE SPURWECHSELWARNUNG MIT INFORMATIONEN VON HINTEREN RADARSENSOREN
AVERTISSEMENT DE SORTIE INVOLONTAIRE DE VOIE AMÉLIORÉ FAISANT APPEL À DES INFORMATIONS EN PROVENANCE DE CAPTEURS RADAR ARRIÈRE

(30) Priority: 05.09.2013 US 201361874215 P
(43) Date of publication of application: 13.07.2016
(73) Proprietor: Robert Bosch GmbH, 70442 Stuttgart (DE)
(72) Inventor: KIM, James, Royal Oak, Michigan 48067 (US); CHAKRABORTY, Bhavana, Novi, Michigan 48375 (US); BUCKNER, Kevin, Macomb, Michigan 48042 (US); SCHWINDT, Oliver, Novi, Michigan 48374 (US)
(86) International application number: PCT/US2014/053714
(87) International publication number: WO 2015/034828

(56) References cited:
- DE-A1-102006 034 122
- DE-A1-102011 016 770
- DE-A1-102011 086 241

## Description

### BACKGROUND

The invention relates to methods and systems for detecting lane departures and the documents DE 10 2006 034 122 A1 and DE 10 2011 016 770 A1 disclose technological background information for the present invention. The former document discloses a system which collects data from front and rear sensors, performs an object position detection and speed detection and assists in lane changes. The system does not perform lane marking detection, intervention into steering, brake and drive train. The latter document discloses a system which collects data from front and rear sensors, performs object position detection, speed detection, lane marking detection and intervention into steering, brake and drive train to control the vehicle.

### SUMMARY

A lane departure warning ("LDW") functionality provides a warning to a driver when the vehicle may or has unintentionally exited its current driving lane. For example, LDW functionality can use a forward-facing camera to detect lane markings and can calculate, based on the detected markings and an applied steering wheel torque, if the driver will unintentionally exit his or her current driving lane. If this situation occurs, the functionality generates a warning, such as an audible chime or a haptic alert (e.g., steering wheel vibration).

A LDW functionality can be configurable. Configurations can be implemented in at least three different ways. In one way, configurations or configuration settings are made during manufacturing based on, for example, the characteristics and architecture of the vehicle in which the LDW system is installed. In another way, some configurations can be made by a vehicle driver to suit particular preferences of the driver. For example, a driver can set when or how lane departure warnings are generated. For example, some configuration settings for LDW functionality are time and/or distance based, so that the driver can select between a later warning (i.e., the LDW functionality waits until a lane marking is crossed before issuing a warning) or an earlier warning (i.e., the LDW functionality issues a warning before a lane marking is crossed). A third way in which configurations or configuration settings can be changed is by the system itself. For example, the configurations can be changed (often temporarily) based upon sensed or determined changes in circumstance or changes in the vehicle situation. These types of automatic changes can occur without necessarily notifying the driver that they have occurred.

Another type of safety technology that is similar to LDW is lane keeping support ("LKS"). LKS functionality can automatically apply steering wheel torque to correct a vehicle's steering to keep the vehicle in a current lane if unintentional departure from the lane is detected. This functionality can also be configured by a driver. For example, a driver can configure LKS functionality to automatically correct steering to follow lanes tightly (e.g., even before lane markings are crossed) or to only automatically correct steering when lane lines have been crossed.

The object of the present invention is to provide vehicle including a control system and a method which enhance the vehicle LDW & LKS functionality. This object is solved by a vehicle of claim 1 and a method of claim 9 by automatically changing and overriding configuration settings for the LDW & LKS functions by adjusting the threshold for the configuration settings. Further advantageous embodiments are listed in the dependent claims and provide time estimates for collision and modifications of intensity of an automatic action. Hereinafter, some aspects of the invention contributing to the understanding of the invention are discussed separately before describing the embodiments of the invention.

Aspects of the invention provide methods and systems for improving LDW and/or LKS functionality using data from rear radar sensors. In particular, if a vehicle is equipped with rear radar sensors for performing blind-spot detection ("BSD") and closing vehicle warning ("CVW") functionality, this data can be used to enhance LDW and/or LKS functionality. For example, configuration settings for LDW and/or LKS functionality can be modified (in this case, automatically and overriding driver settings) based on whether rear radar sensors mounted on the vehicle detect objects adjacent to the vehicle that warrant earlier lane departure warnings and/or reactions.

For example, one aspect of the invention provides a system for controlling a vehicle. The system includes at least one controller. The at least one controller is configured to obtain data regarding an object detected by a rearward-facing environment sensor mounted on the vehicle. The data includes at least one selected from the group comprising a position of the object and a speed of the object. The at least one controller is also configured to automatically adjust at least one configuration setting based on the data and perform at least one automatic action when the vehicle is within a threshold distance from a lane marking based on the at least one configuration setting.

Another aspect of the invention provides a method of controlling a vehicle. The method includes obtaining, by a controller, data regarding an object detected by a rearward-facing environment sensor mounted on the vehicle, wherein the data includes at least one selected from the group comprising a position of the object and a speed of the object and automatically, by the controller, adjusting at least one configuration setting based on the data. The method also includes obtaining lane marking data, determining a distance between the vehicle and a lane marking based on the lane marking data, and performing, based on the distance and the at least one configuration setting, at least one automatic action to position the vehicle on one side of the lane marking.

Other aspects of the invention will become apparent by consideration of the detailed description and accompany drawings.

### BRIEF DESCRIPTION OF THE DRAWINGS

FIG. 1 schematically illustrates a vehicle including a lane departure controller and a plurality of environment sensors.
FIG. 2 schematically illustrates the lane departure controller of FIG. 1.
FIG. 3 schematically illustrates communication between the lane departure controller of FIG. 1 and the plurality of environment sensors of FIG. 1.
FIG. 4 is a flow chart illustrating a method of performing lane departure management performed by the controller of FIG. 1.
FIGS. 5A and 5B schematically illustrate objects detected by a rearward-facing environment sensor.

### DETAILED DESCRIPTION

One of ordinary skill in the art, and based on a reading of this detailed description, would recognize that, in at least one embodiment, the electronic based aspects of the invention may be implemented in software (e.g., stored on non-transitory computer-readable medium) executable by one or more processors. As such, it should be noted that a plurality of hardware and software based devices, as well as a plurality of different structural components may be utilized to implement the invention. For example, "controllers" described in the specification can include one or more processors, one or more non-transitory computer-readable medium modules, one or more input/output interfaces, and various connections (e.g., a system bus) connecting the components.

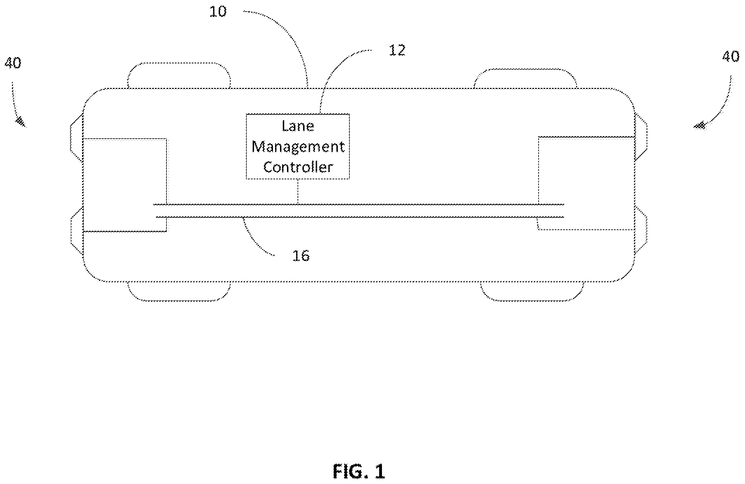

FIG. 1 illustrates a vehicle 10. The vehicle 10 includes a lane departure controller 12. The controller 12 can be connected to a network included in the vehicle 10, such as a controller area network ("CAN") bus 16, that allows the controller 12 to exchange data with other components included in the vehicle 10.

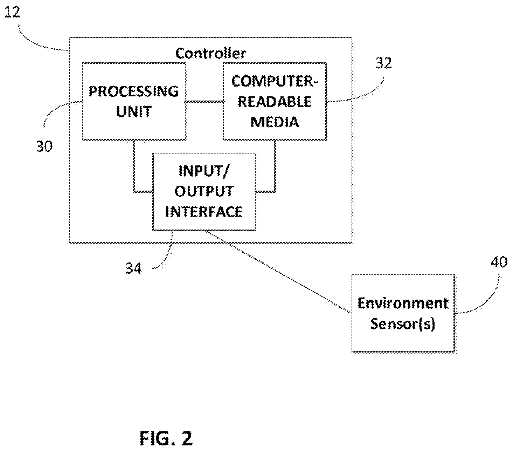

As illustrated in FIG. 2, the controller 12 includes a processing unit 30 (e.g., a microprocessor, application specific integrated circuit, etc.), non-transitory computer-readable media 32, and an input/output interface 34. The computer-readable media 32 can include random access memory ("RAM") and/or read-only memory ("ROM"). The input/output interface 34 transmits and receives data from devices external to the controller 12 (e.g., over the bus 16 and/or over direct (e.g., wired) connections).

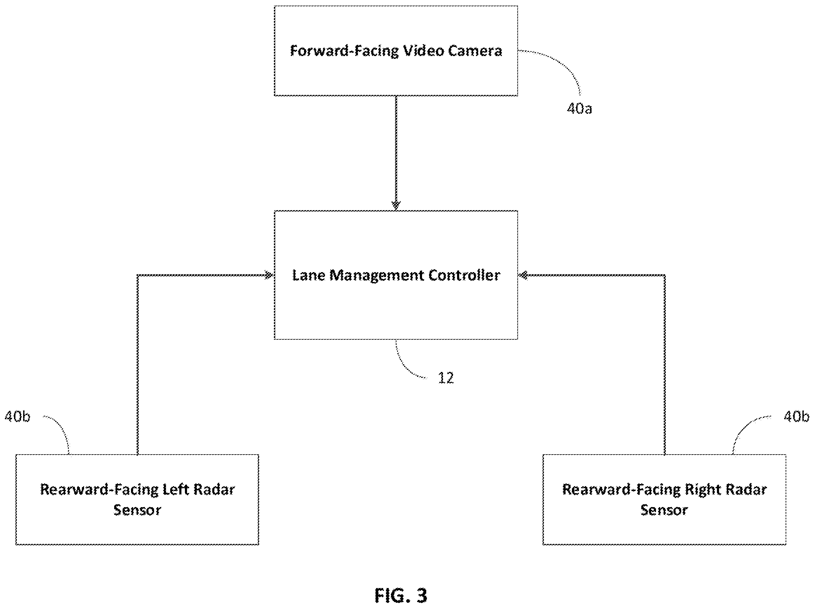

For example, as illustrated in FIGS. 1 and 2, the controller 12 can be configured to obtain data from one or more environment sensors 40 mounted on the vehicle 10 through the input/output interface 34 (e.g., over the bus 16 and/or over a direct connection). The environment sensors 40 detect conditions regarding an environment around the vehicle. The environment sensors 40 can include cameras (e.g., still or video), radar sensors, ultrasonic sensors, etc. For example, in the embodiment illustrated in FIG. 3, the environment sensors 40 can include at least one forward-facing video camera 40a and at least two rearward-facing radar sensors 40b (e.g., configured to detect an environment to the left and right of the vehicle 10, respectively). The video camera 40a provides lane marking data used by the controller 12 to identify lane markings and determine whether the vehicle 10 may or has crossed a lane marking. If such a situation occurs, the controller 12 can perform lane departure warning ("LDW") and/or lane keeping support ("LKS") functionality. For example, the controller 12 can be configured to take one or more automatic actions, such as issuing a warning light(s) on an interior display of the vehicle 10, providing visual or audible warnings (e.g., chimes) in the interior of the vehicle 10, providing haptic feedback to the driver (e.g., through the steering wheel, the accelerator pedal, etc.), and/or automatically correcting steering of the vehicle 10 to bring the vehicle 10 back into a current lane (i.e., to one side of detected lane markings).

With continued referenced to FIG. 3, the controller 12 uses data from the two radar sensors 40b to detect objects (e.g., other vehicles) adjacent to the vehicle 10. As described in more detail below, the controller 12 uses objects detected by the radar sensors 40b to automatically adjust configuration settings for LDW and/or LKS functionality. In some embodiments, the sensors 40b can be part of one or more control systems for the vehicle 10 separate from LDW and/or LKS functionality, such as a blind spot detection ("BSD") system, a closing vehicle warning ("CVW") system, a time-to-collision ("TTC") system, etc. Accordingly, in some embodiments, the controller 12 uses data obtained by existing radar sensors used with other vehicle control systems to perform LDW and/or LKS functionality, which reduces costs and complexity of the LDW and/or LKS functionality.

Returning to FIG. 2, the processing unit 30 included in the controller 12 receives data (e.g., from the media 32 and/or the input/output interface 34) and processes the data by executing one or more instructions or modules. The instructions or modules are stored in the computer-readable media 32. The processing unit 30 also stores data (e.g., data received from the bus 16 or data generated by instructions or modules executed by the processing unit 30) to the media 32. It should be understood that although only a single processing unit, input/output interface, and computer-readable media module are illustrated in FIG. 2, the controller 12 can include multiple processing units, memory modules, and/or input/output interfaces. It should also be understood that the functionality performed by the controller 12 can be distributed over multiple controllers included in the vehicle 10, and the controller 12 can be configured to perform additional functionality.

The instructions stored in the computer-readable media 32 provide particular functionality when executed by the processing unit 30. In general, the instructions, when executed by the processing unit 30, perform LDK functionality and/or LKS functionality. As described above, LDW functionality provides a warning to the driver when a vehicle unintentionally exits a current driving lane (or when such action is suspected). Similarly, LKS functionality provides automatic steering corrections to keep a vehicle in its current lane.

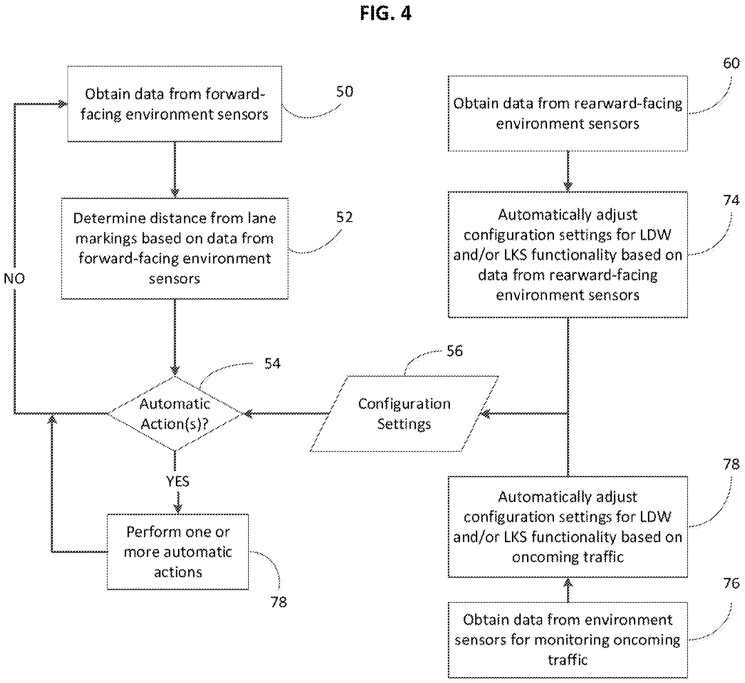

As noted above, the controller 12 can be configured to obtain data from the rearward-facing environment sensors 40 and use this data to improve the performance of LDW functionality and/or LKS functionality. In particular, the controller 12 can be configured to perform (i.e., by executing instructions with the processing unit 30) the method illustrated in FIG. 4. As illustrated in FIG. 4, the method includes obtaining data from the one or more forward-facing environment sensors 40a (e.g., one or more cameras) (at block 50). The data from the forward-facing environment sensors 40a can include lane marking data. The controller 12 uses the data from the forward-facing sensors 40a to determine a distance between the vehicle 10 and a lane marking (at block 52).

After determining a distance between the vehicle 10 and detected lane markings (at block 52), the controller 12 can be configured to determine whether an automatic action (e.g., warning or corrective action) should be taken (at block 54). The controller 12 can be configured to make this determination based on the determined distance, current vehicle operating conditions (e.g., a current steering trajectory and/or speed of the vehicle 10), and one or more configuration settings 56 for the LDW and/or LKS functionality. For example, as noted above, LDW and/or LKS functionality can be configurable. In particular, a driver can set when or how the lane departure warnings and/or corrective steering occurs. The controller 12, however, can also be configured to automatically adjust these configuration settings.

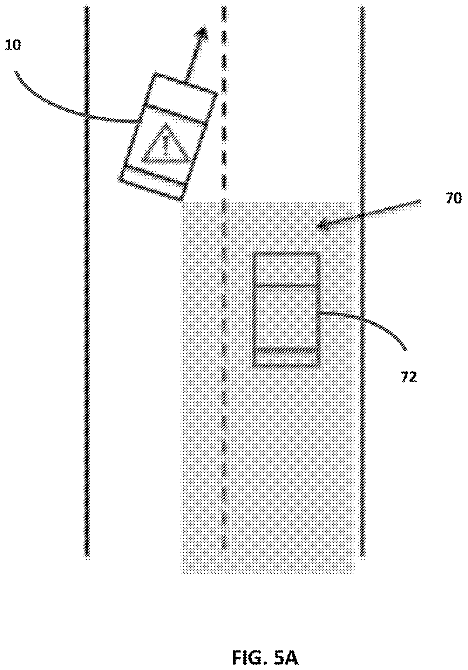

To adjust the configuration settings 56, the controller 12 obtains data from one or more rearward-facing environment sensors 40b (e.g., radar sensors) (at block 60). The data from the rearward-facing environment sensors 40b includes data regarding objects detected adjacent to the vehicle 10 (e.g., vehicles in adjacent lanes that are passing, stagnating, or hovering next to the vehicle 10). For example, FIG. 5A illustrates a detection zone 70 of the vehicle 10 (e.g., a blind spot detection zone) associated with one or more rearward-facing radar sensors 40b. As noted above, in some embodiments, the detection zone 70 is used by other vehicle control systems, such as a BSD system and/or a CVW system.

If an object is detected in the detection zone 70, such as another vehicle 72, the controller 12 can adjust at least one configuration setting 56 for the LDW and/or LKS functionality (at block 74). For example, the controller 12 can be configured to determine a position of a detected vehicle 72 (see FIG. 5A) (e.g., with reference to the vehicle 10). In addition or alternatively, the controller 12 can be configured to determine a speed (e.g., a velocity) of a detected vehicle 72. Also, in some embodiments, the controller 12 is configured to detect infrastructure adjacent to the vehicle 10 (e.g., guardrails, walls, etc.). The controller 12 uses this data regarding the detected object to automatically adjust one or more configuration settings 56 for LDW and/or LKS functionality (at block 74).

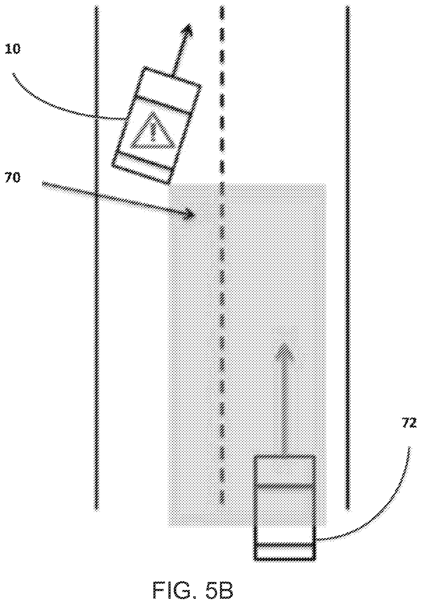

For example, if a hovering or slowly passing vehicle 72 is detected in the zone 70 (see FIG. 5A), the controller 12 can automatically adjust configuration settings 56 for LDW and/or LKS functionality to provide for earlier automatic actions (e.g., earlier than applied by default settings). Similarly, as illustrated in FIG. 5B, if a vehicle 72 is detected in the zone 70 that is approaching the vehicle 10 at a high velocity (e.g., a velocity greater than a predetermined threshold), the controller 12 can automatically adjust configuration settings 56 for LDW and/or LKS functionality to provide for even earlier automatic actions (e.g., than applied by default settings or settings adjusted based on a detected hovering or slowly approaching vehicle 72 as illustrated in FIG. 5A). Accordingly, if a vehicle 72 is detected in an adjacent lane, the controller 12 can provide earlier warnings and/or reactions to mitigate potential collisions between the vehicle 10 and the detected vehicle 72 if the vehicle 10 were to deviate from its current lane.

The controller 12 can configure the LDW and/or LKS functionality to provide earlier warnings and/or reactions by adjusting (i.e., increasing) a threshold distance between the vehicle 10 and a lane marking used to control when warnings and/or reactions are generated. The threshold distance is used by the LDW and/or LKS functionality to identify when an automatic action should be performed. For example, if the vehicle 10 is within the threshold distance from detected lane markings, lane departure warnings and/or corrective steering is performed. Accordingly, if this threshold is increased, the warnings and/or reactions are generated when the vehicle 10 is further from a lane marking. The controller 12 can also configure the LDW and/or LKS functionality to provide earlier warnings and/or reactions by changing the warning and/or reaction provided (e.g., a type of warning, an intensity of a warning, an intensity of a steering correction, etc.). Similarly, the controller 12 can configure the LDW and/or LKS functionality to provide earlier warnings and/or reactions by performing a warning and/or reaction regardless of a determined distance between the vehicle 10 and detected lane markings. Furthermore, the controller 12 can configure the LDW and/or LKS functionality to provide earlier warnings and/or reactions by enabling LDW and/or LKS functionality even if a driver previously disabled the functionality. The controller 12 can also be configured to return LDW and/or LKS to normal or default configuration settings 56 if objects detected by the rearward-facing environment sensors 40b no longer warrant earlier warnings and/or reactions.

It should be understood that in some embodiments, the controller 12 receives data regarding objects detected around the vehicle 10 through another vehicle control system. For example, a BSD system can issue a message (e.g., a CAN message, such as a single bit) if the system detects a vehicle 72 in the detection zone 70. The controller 12 reads this message and uses the message to determine how to adjust configuration settings 56 for LDW and/or LKS functionality. Similarly, in some embodiments, a CVW system calculates a distance and/or TTC between a detected vehicle 72 and the vehicle 10. The CVW system can be configured to issue a message at a variable distance or TTC between the detected vehicle 72 and the vehicle 10. For example, for fast approaching detected vehicles 72 with a low TTC, the CVW system can issue an earlier message than slowly approaching targets with a high TTC. These CVW messages can be sent as CAN messages (e.g., as a single bit). Accordingly, the controller 12 can be configured to read these messages (e.g., and any associated distance and/or TTC values) and use the messages to determine how to adjust the configuration settings 56 for LDW and/or LKS functionality.

Also, in some embodiments, as illustrated in FIG. 4, the controller 12 can be configured to monitor oncoming traffic (e.g., in an adjacent lane) using at least one environment sensor 40 (e.g., a forward-facing camera) (at block 76) to determine if departure into an adjacent lane would result in a high probability of a head-on collision. Since head-on collisions can be severe, the controller 12 can be configured to automatically adjust one or more configuration settings 56 for LDK and/or LKS functionality based on detected oncoming traffic (at block 78). For example, the controller 12 can be configured to adjust configuration settings 56 for LDK and/or LKS functionality to intensify warnings or steering interventions, to modify thresholds for activating warnings or steering interventions (e.g., provide a warning when the vehicle 10 is at a farther distance from a detected lane marking than normal or default), and/or enable LDW and/or LKS functionality (e.g., permanently enable regardless of whether a driver previously disabled this functionality) when detected on-coming traffic indicates that a head-on collision would be likely if the vehicle 10 were to depart from its current lane.

After making any adjustments to the configuration settings 56 (at blocks 74 and 78), the configuration settings 56 are used to determine whether an automatic actions should be performed (at block 54). As noted above, this can include determining whether the vehicle 10 is within a predetermined distance from a lane marking, whether a vehicle 72 is detected in an adjacent lane and the position and/or velocity of the detected vehicle 72, whether an oncoming vehicle has been detected, etc. Accordingly, if dictated by the configuration settings 56, the controller 12 performs one or more automatic actions, such as generating a visual, audible, and/or tactile warning and/or performing corrective steering (at block 80).

It should be understood that the functionality described in the present application can be performed by the controller 12 and/or distributed among the controller 12 and other vehicle control systems. For example, in some embodiments, the controller 12 obtains data regarding objects detected around a vehicle (e.g., from rear radar sensors) and adjusts the configuration settings 56 accordingly. A separate controller (e.g., a LDW and/or LKS controller) can then apply the settings 56 to take appropriate actions. Also, it should be understood that controller 12 may only apply LDW functionality or may only apply LKS functionality and is not required to perform both functionality. Furthermore, it should be understood that different configuration settings 56 can be used for LDW functionality and LKS functionality. For example, a different threshold distance can be used by LDW functionality when generating a warning than the threshold distance used by LKS functionality when performing corrective steering.

Various features and advantages of the invention are set forth in the following claims.

## Claims

1. A vehicle (10) including a control system for controlling the vehicle, the system comprising
at least one controller (12):
a) configured to obtain (50, 60) data regarding an object detected by a rearward-facing environment sensor (40) mounted on the vehicle, wherein the data includes at least one selected from the group comprising a position of the object and a speed of the object;
b) configured to automatically adjust (74, 78) at least one configuration setting based on the data;
c) configured to perform (78) at least one automatic action when the vehicle is within a threshold distance from a lane marking based on the at least one configuration setting; and
d) configured to automatically adjust (78) the at least one configuration setting based on the data by modifying the threshold distance.

2. The vehicle of Claim 1, wherein the at least one controller is further configured to obtain (76) data regarding oncoming traffic from a forward-facing environment sensor and automatically adjust the at last one configuration setting based on the data regarding oncoming traffic.

3. The vehicle of Claim 1, wherein the at least one controller is configured to automatically adjust the at least one configuration setting based on the data by modifying an intensity of the at least one automatic action.

4. The vehicle of Claim 1, wherein the at least one controller is configured to automatically adjust the at least one configuration setting based on the data by enabling the at least one automatic action when the at least one automatic action was previously disabled by a driver of the vehicle.

5. The vehicle of Claim 1, wherein the at least one automatic action includes at least one selected from the group comprising issuing a warning and performing corrective steering.

6. The vehicle of Claim 1, wherein the rearward-facing environment sensor includes at least one radar sensor (40b).

7. The vehicle of Claim 1, further comprising a blind spot detection system configured to detect the object and issue a message based on the object, wherein the at least one controller is configured to receive the message and obtain the data based on the message.

8. The vehicle of Claim 1, further comprising a closing vehicle warning system configured to determine a time-to-collision between the vehicle and the object and issue a message based on the time-to-collision, wherein the at least one controller is configured to receive the message and obtain the data based on the message.

9. A method of controlling a vehicle, the method comprising:
a) obtaining (50, 60), by a controller, data regarding an object detected by a rearward-facing environment sensor mounted on the vehicle, wherein the data includes at least one selected from the group comprising a position of the object and a speed of the object;
b) automatically, by the controller, adjusting (74, 78) at least one configuration setting based on the data;
c) obtaining lane marking data;
d) determining (52) a distance between the vehicle and a lane marking based on the lane marking data;
e) performing (78), based on the distance and the at least one configuration setting, at least one automatic action to position the vehicle on one side of the lane marking; and
f) wherein automatically adjusting (78) the at least one configuration setting includes modifying a threshold distance and wherein performing the at least one automatic action includes performing the at least one automatic action when the distance is less than the threshold distance.

10. The method of Claim 9, further comprising obtaining data regarding oncoming traffic and wherein automatically adjusting the at least one configuration setting includes automatically adjusting (76) the at least one configuration setting based on the data regarding oncoming traffic.

11. The method of Claim 9, wherein automatically adjusting the at least one configuration setting includes modifying an intensity of the at least one automatic action.

12. The method of Claim 9, wherein automatically adjusting the at least one configuration setting includes enabling the at least one automatic action when the at least one automatic action was previously disabled by a driver of the vehicle.

13. The method of Claim 9, wherein performing the at least one automatic action includes performing at least one selected from the group comprising issuing a warning and performing corrective steering.

14. The method of Claim 9, wherein obtaining the data regarding the object includes obtaining a message indicating whether a second vehicle has been detected in a blind spot detection zone for the first vehicle.

15. The method of Claim 9, wherein obtaining the data regarding the object includes obtaining a message indicating a second vehicle has been detected within a predetermined distance from the first vehicle.

16. The method of Claim 9, wherein obtaining the data regarding the object includes obtaining a message indicating a time-to-collision between the first vehicle and a second vehicle.

## Patentansprüche

1. Fahrzeug (10), das ein Steuersystem zum Steuern des Fahrzeugs beinhaltet, wobei das System Folgendes umfasst:
mindestens eine Steuerung (12):
a) die dazu ausgelegt ist, Daten zu einem Objekt zu erhalten (50, 60), das von einem nach hinten weisenden Umgebungssensor (40), der am Fahrzeug montiert ist, detektiert wird, wobei die Daten mindestens eines beinhalten, das aus der Gruppe, die eine Position des Objekts und eine Geschwindigkeit des Objekts umfasst, ausgewählt ist;
b) die dazu ausgelegt ist, auf Basis der Daten mindestens eine Auslegungseinstellung automatisch anzupassen (74, 78);
c) die dazu ausgelegt ist, auf Basis der mindestens einen Auslegungseinstellung mindestens eine automatische Aktion durchzuführen (78), wenn sich das Fahrzeug in einem Schwellwertabstand von einer Spurmarkierung befindet; und
d) die dazu ausgelegt ist, auf Basis der Daten durch Modifizieren des Schwellwertabstands die mindestens eine Auslegungseinstellung automatisch anzupassen (78).

2. Fahrzeug nach Anspruch 1, wobei die mindestens eine Steuerung ferner dazu ausgelegt ist, Daten zu entgegenkommendem Verkehr von einem nach vorn weisenden Umgebungssensor zu erhalten (76) und die mindestens eine Auslegungseinstellung auf Basis der Daten zu entgegenkommendem Verkehr automatisch anzupassen.

3. Fahrzeug nach Anspruch 1, wobei die mindestens eine Steuerung dazu ausgelegt ist, die mindestens eine Auslegungseinstellung durch Modifizieren einer Intensität der mindestens einen automatischen Aktion auf Basis der Daten automatisch anzupassen.

4. Fahrzeug nach Anspruch 1, wobei die mindestens eine Steuerung dazu ausgelegt ist, die mindestens eine Auslegungseinstellung durch Aktivieren der mindestens einen automatischen Aktion, wenn die mindestens eine automatische Aktion zuvor von einem Fahrer des Fahrzeugs deaktiviert wurde, auf Basis der Daten automatisch anzupassen.

5. Fahrzeug nach Anspruch 1, wobei die mindestens eine automatische Aktion mindestens eines beinhaltet, das aus der Gruppe, die das Ausgeben einer Warnung und das Durchführen eines korrigierenden Lenkens umfasst, ausgewählt ist.

6. Fahrzeug nach Anspruch 1, wobei der nach hinten weisende Umgebungssensor mindestens einen Radarsensor (40b) beinhaltet.

7. Fahrzeug nach Anspruch 1, das ferner ein Totwinkeldetektionssystem umfasst, das dazu ausgelegt ist, das Objekt zu detektieren und auf Basis des Objekts eine Nachricht auszugeben, wobei die mindestens eine Steuerung dazu ausgelegt ist, die Nachricht zu empfangen und die Daten auf Basis der Nachricht zu erhalten.

8. Fahrzeug nach Anspruch 1, das ferner ein Warnsystem für ein sich von hinten annäherndes Fahrzeug umfasst, das dazu ausgelegt ist, eine Zeit bis zur Kollision zwischen dem Fahrzeug und dem Objekt zu bestimmen und auf Basis der Zeit bis zur Kollision eine Nachricht auszugeben, wobei die mindestens eine Steuerung dazu ausgelegt ist, die Nachricht zu empfangen und die Daten auf Basis der Nachricht zu erhalten.

9. Verfahren zum Steuern eines Fahrzeugs, wobei das Verfahren Folgendes umfasst:
a) Erhalten (50, 60) von Daten zu einem Objekt, das von einem nach hinten weisenden Umgebungssensor, der am Fahrzeug montiert ist, detektiert wird, durch eine Steuerung, wobei die Daten mindestens eines beinhalten, das aus der Gruppe, die eine Position des Objekts und eine Geschwindigkeit des Objekts umfasst, ausgewählt ist;
b) automatisches Anpassen (74, 78) mindestens einer Auslegungseinstellung durch die Steuerung auf Basis der Daten;
c) Erhalten von Spurmarkierungsdaten;
d) Bestimmen (52) eines Abstands zwischen dem Fahrzeug und einer Spurmarkierung auf Basis der Spurmarkierungsdaten;
e) Durchführen (78) mindestens einer automatischen Aktion auf Basis des Abstands und der mindestens einen Auslegungseinstellung, um das Fahrzeug auf einer Seite der Spurmarkierung zu positionieren; und
f) wobei das automatische Anpassen (78) der mindestens einen Auslegungseinstellung das Modifizieren eines Schwellwertabstands beinhaltet und wobei das Durchführen der mindestens einen automatischen Aktion das Durchführen der mindestens einen automatischen Aktion, wenn der Abstand geringer ist als der Schwellwertabstand, beinhaltet.

10. Verfahren nach Anspruch 9, das ferner das Erhalten von Daten zu entgegenkommendem Verkehr umfasst und wobei das automatische Anpassen der mindestens einen Auslegungseinstellung das automatische Anpassen (76) der mindestens einen Auslegungseinstellung auf Basis der Daten zu entgegenkommendem Verkehr beinhaltet.

11. Verfahren nach Anspruch 9, wobei das automatische Anpassen der mindestens einen Auslegungseinstellung das Modifizieren einer Intensität der mindestens einen automatischen Aktion beinhaltet.

12. Verfahren nach Anspruch 9, wobei das automatische Anpassen der mindestens einen Auslegungseinstellung das Aktivieren der mindestens einen automatischen Aktion, wenn die mindestens eine automatische Aktion zuvor von einem Fahrer des Fahrzeugs deaktiviert wurde, beinhaltet.

13. Verfahren nach Anspruch 9, wobei das Durchführen der mindestens einen automatischen Aktion das Durchführen von mindestens einem beinhaltet, das aus der Gruppe, die das Ausgeben einer Warnung und das Durchführen eines korrigierenden Lenkens umfasst, ausgewählt ist.

14. Verfahren nach Anspruch 9, wobei das Erhalten der Daten zum Objekt das Erhalten einer Nachricht, die anzeigt, ob in einer Totwinkeldetektionszone für das erste Fahrzeug ein zweites Fahrzeug detektiert wurde, beinhaltet.

15. Verfahren nach Anspruch 9, wobei das Erhalten der Daten zum Objekt das Erhalten einer Nachricht, die anzeigt, dass innerhalb eines vorbestimmten Abstands vom ersten Fahrzeug ein zweites Fahrzeug detektiert wurde, beinhaltet.

16. Verfahren nach Anspruch 9, wobei das Erhalten der Daten zum Objekt das Erhalten einer Nachricht, die eine Zeit bis zur Kollision zwischen dem ersten Fahrzeug und einem zweiten Fahrzeug anzeigt, beinhaltet.

## Revendications

1. Véhicule (10) comportant un système de contrôle pour contrôler le véhicule, le système comprenant au moins un contrôleur (12) :
a) conçu pour obtenir (50, 60) des données concernant un objet détecté par un capteur d'environnement tourné vers l'arrière (40) qui est monté sur le véhicule, dans lequel les données comprennent au moins une donnée choisie dans le groupe comprenant une position de l'objet et une vitesse de l'objet ;
b) conçu pour ajuster automatiquement (74, 78) au moins un réglage de configuration sur la base des données ;
c) conçu pour exécuter (78) au moins une action automatique sur la base dudit au moins un réglage de configuration lorsque le véhicule se trouve à une distance seuil d'un marquage routier ; et
d) conçu pour ajuster automatiquement (78) ledit au moins un réglage de configuration sur la base des données en modifiant la distance seuil.

2. Véhicule selon la revendication 1, dans lequel ledit au moins un contrôleur est en outre conçu pour obtenir (76) des données concernant le trafic en sens inverse en provenance d'un capteur d'environnement tourné vers l'avant et pour ajuster automatiquement ledit au moins un réglage de configuration sur la base des données concernant le trafic en sens inverse.

3. Véhicule selon la revendication 1, dans lequel ledit au moins un contrôleur est conçu pour ajuster automatiquement ledit au moins un réglage de configuration sur la base des données en modifiant une intensité de ladite au moins une action automatique.

4. Véhicule selon la revendication 1, dans lequel ledit au moins un contrôleur est conçu pour ajuster automatiquement ledit au moins un réglage de configuration sur la base des données en activant ladite au moins une action automatique lorsque ladite au moins une action automatique a été précédemment désactivée par un conducteur du véhicule.

5. Véhicule selon la revendication 1, dans lequel ladite au moins une action automatique comporte au moins une action choisie dans le groupe comprenant l'émission d'une alarme et l'exécution d'une manœuvre de correction.

6. Véhicule selon la revendication 1, dans lequel le capteur d'environnement tourné vers l'arrière comprend au moins un capteur radar (40b).

7. Véhicule selon la revendication 1, comprenant en outre un système de détection d'angle mort conçu pour détecter l'objet et émettre un message sur la base de l'objet, dans lequel ledit au moins un contrôleur est conçu pour recevoir le message et obtenir les données sur la base du message.

8. Véhicule selon la revendication 1, comprenant en outre un système d'alarme de véhicule se rapprochant conçu pour déterminer un temps avant collision entre le véhicule et l'objet et émettre un message sur la base du temps avant collision, dans lequel ledit au moins un contrôleur est conçu pour recevoir le message et obtenir les données sur la base du message.

9. Procédé de contrôle d'un véhicule, le procédé comprenant :
a) l'obtention (50, 60), par un contrôleur, de données concernant un objet détecté par un capteur d'environnement tourné vers l'arrière qui est monté sur le véhicule, dans lequel les données comprennent au moins une donnée choisie dans le groupe comprenant une position de l'objet et une vitesse de l'objet ;
b) l'ajustement automatique, par le contrôleur, d'au moins un réglage de configuration (74, 78) sur la base des données ;
c) l'obtention de données de marquage routier ;
d) la détermination (52) d'une distance entre le véhicule et un marquage routier sur la base des données de marquage routier ;
e) l'exécution (78), sur la base de la distance et dudit au moins un réglage de configuration, d'au moins une action automatique pour positionner le véhicule sur un côté du marquage routier ; et
f) dans lequel l'ajustement automatique (78) dudit au moins un réglage de configuration comprend la modification d'une distance seuil ; et
dans lequel l'exécution de ladite au moins une action automatique comprend l'exécution de ladite au moins une action automatique lorsque la distance est inférieure à la distance seuil.

10. Procédé selon la revendication 9, comprenant en outre l'obtention de données concernant le trafic en sens inverse et dans lequel l'ajustement automatique dudit au moins un réglage de configuration comprend l'ajustement automatique (76) dudit au moins un réglage de configuration sur la base des données concernant le trafic en sens inverse.

11. Procédé selon la revendication 9, dans lequel l'ajustement automatique dudit au moins un réglage de configuration comprend la modification d'une intensité de ladite au moins une action automatique.

12. Procédé selon la revendication 9, dans lequel l'ajustement automatique dudit au moins un réglage de configuration comprend l'activation de ladite au moins une action automatique lorsque ladite au moins une action automatique a été précédemment désactivée par un conducteur du véhicule.

13. Procédé selon la revendication 9, dans lequel l'exécution de ladite au moins une action automatique comprend l'exécution d'au moins une action choisie dans le groupe comprenant l'émission d'une alarme et l'exécution d'une manœuvre de correction.

14. Procédé selon la revendication 9, dans lequel l'obtention des données concernant l'objet comprend l'obtention d'un message indiquant si un second véhicule a été détecté dans une zone de détection d'angle mort pour le premier véhicule.

15. Procédé selon la revendication 9, dans lequel l'obtention des données concernant l'objet comprend l'obtention d'un message indiquant qu'un second véhicule a été détecté à moins d'une distance prédéterminée du premier véhicule.

16. Procédé selon la revendication 9, dans lequel l'obtention des données concernant l'objet comprend l'obtention d'un message indiquant un temps avant collision entre le premier véhicule et un second véhicule.
